# EUROPEAN PATENT APPLICATION

(11) **EP 3 923 173 A1**
(43) Date of publication of application: **15.12.2021**
(21) Application number: 20179343.7
(22) Date of filing: 10.06.2020
(51) Int. Cl.: G06F 21/64, H04L 9/32, G06F 16/27

(54) **METHODS AND DEVICES FOR STORING INFORMATION IN A DISTRIBUTED LEDGER DATABASE**

(71) Applicant: Hieronimi, Christian, 82031 Grünwald (DE)
(72) Inventor: Hieronimi, Christian, 82031 Grünwald (DE)
(74) Representative: Fleuchaus, Michael A.

(57) **Abstract**

The invention relates to a method for generating a first signed data item, the first signed data item comprising first information to be stored in a distributed ledger database, wherein the distributed ledger database is managed by a computer network, the computer network comprising a plurality of nodes, wherein the method comprises at least the steps of (i) initiating, by a first computing device, the generating of a first data item by providing the second computing device with an initiating data item, wherein the first data item comprises the first information and the second computing is in data communication with the computer network via at least a first node of the computer network, (ii) digitally signing, by the first computing device, the first data item by using a first private key, thereby generating the first signed data item, and (iii) providing, by the first computing device, the second computing device with the first signed data item, the second computing device being configured to initiate the storing of the first information in the distributed ledger database.

## Description

The present invention refers to computer-implemented methods and devices for storing information in a distributed ledger database e.g. in a blockchain. The distributed ledger database is managed by a computer network comprising a plurality of nodes, each nodes of this plurality of nodes storing and managing a copy of this database.

In particular, the to-be-stored information is indicative of an action taken by a system, e.g. it may document the action taken by the system. For instance, this action may be taken in response to a task assigned to the system. In order to store the task assigned to the system in an immutable, accountable way, the task may also be stored in the distributed ledger database. If this is the case, typically, the task is not notified to the system, which becomes aware of the task by periodically querying the distributed ledger database to detect the storing of the task therein.

For example, the system may be a machine tool, e.g. a milling or a grinding machine, and the action may be an action aiming to overcome a malfunction of the machine. In this case, the task may be assigned to the system by a computing device that carries out the diagnostic of the machine tool. For instance, the system may be a patient and the task assigned to the patient by a physician may be the task of taking a medicament. In this case, the action taken by the system is the action of taking the medication prescribed by the physician. In particular, the system may be a computing device and the action an action aiming to quarantine or erase a potentially infected file stored in the device.

Methods for storing information in a distributed ledger database are known in the art. Typically, a computing device, hereinafter also referred to as: "the client", initiates the storing of this information by formulating and sending a request to at least a node of the computer network. At least some of the nodes of the computer network, i.e. the validation nodes, validate the request and generate a response to this request. In particular, the validation aims to check whether the storing of the information is compatible with the current state of the distributed ledger database. For each validation node, the response generated by this node comprises information indicative of the way the distributed ledger database is modified by the storing of the information and, if said node establishes that the request is valid, is digitally signed by said node.

The validation nodes send their responses to the client which uses them to generate a to-be-stored data item data comprising the information to be stored. The client then sends the to-be-stored data item to at least a node of the computer network for storing in the database.

Hence, according to the known methods, the client has the burden of generating the request and to-be-stored data item, to initiate the storing of the to-be-stored data item, and to exchange information with the computer network that manages the database. These operations are resource consuming and may negatively affect the performance of the client. For example, in order to be appropriately processed by the nodes of the computer network, the request and the to-be-stored data item shall be generated by using appropriate software developments kits (SDKs) for the distributed ledger database. These SDKs make use of the resources (memory, CPU, battery) of the client as they are stored in the memory of the client, are run by a CPU of the client and, while running, make use of the RAM of the client.

The performing of such resource-consuming operations is especially detrimental to the client's performance if the resources of the client are limited and/or shall be used by other applications. For instance, if the client is a smart phone or a tablet, the generating of the request may accelerate the discharge of the battery. For example, if the client is a computing device integrated in a machine tool, the run of the SDKs may negatively affect the run of other processes, e.g. of the processes that control the machine tool.

Moreover, in the methods known in the arts, typically the client is in direct data communication with the computer network via at least a node thereof. This may lead to potential security risks stemming from nefarious activities of malicious clients. In the art, such risks are mitigated by limiting the functionalities that may be implemented by using the SDKs for the distributed ledger database. Although beneficial for cybersecurity, these restrictions substantially limit the possible operations that client can carry out.

Furthermore, if the task assigned to the system is stored in the distributed ledger database, the client shall repeatedly inquire the database to detect the storing of the task assigned thereto, thereby making substantial use of its resources. This is further increased if the action in response to the task assigned to the system shall be taken in a timely manner. This is the case, in particular, if the action to be taken aims to overcome a malfunction of a machine tool integrated on an assembly line. Timeliness may be paramount also if the action to be taken is the action of taking a medicament prescribed by a physician.

At least some of these problems are solved, at least in part, by the invention of the present

In a first aspect, the invention refers to a method for generating a first signed data item, the first signed data item comprising first information to be stored in a distributed ledger database (hereinafter also referred to as: "DLD"). The DLD is managed by a computer network, the computer network comprising a plurality of nodes.

The method of the first aspect of the invention, the method comprises at least the step of:
- initiating, by a first computing device, the generating of a first data item by providing a second computing device with an initiating data item.

The first data item comprises the first information. The second computing device is in data communication with the computer network via at least a first node of the computer network. The method of the first aspect of the invention further comprises the steps of:
- digitally signing, by the first computing device, the first data item by using a first private key, thereby generating the first signed data item; and
- providing, by the first computing device, the second computing device with the first signed data item.

The second computing device is configured to initiate the storing of the first information in the DLD e.g. by providing the first node of the computer network with the first signed data item and/or with a data item comprising the first signed data item. In particular, the second computing device is configured to initiate the storing of the first information in the DLD according to the method of the second aspect of the present invention.

According to the present invention, a data item is in particular a set of symbols comprising information. Each of the data items according to the present invention may be stored in a file, organized in a database, and/or stored in storage means or in a cloud. Two or more of the data items may be stored together in the same file.

According to the present invention, the first information may be encoded in a first set of symbols of the first data item. In particular, the first information is stored in the DLD by storing in said database a data item that comprises the first set of symbols.

In particular, according to the present invention, the first information may comprise information indicative of the current state of a system, information indicative of the current permissions of the system and/or information indicative of how the current state of the system shall be modified. For example, the current state of the system may specify that the system has to perform a task and the information indicative of how the current state of the system shall be modified may specify that the that the current state of the system shall be modified to specify that the system has performed the task by taking an action. For instance, the information indicative of the current permissions of the system may specify that the system is allowed to perform the task and/or to take the action to perform said task.

In the present invention, the first information may comprise information indicative of an action taken by the system and/or information indicative of the system.

According to the present invention, the first information may further comprise information indicative of the current state of the task, e.g. information specifying whether the task has already been performed by the system. Moreover, the first information may comprise information indicative of how the current state of the task shall be modified. For example, information indicative of how the current state of the task shall be modified may specify that the state of task shall be modified to specify that the task has been performed by the system.

The information indicative of the current state of the system, the information indicative of the current permissions of the system and/or the information indicative of the current state of the task of the system may be stored in the DLD mentioned above and/or in a second database. For example, the second database may acquire said information from the DLD, e.g. the second database may receive and/or copy said information from the DLD. In particular, the second database stores information indicative of the current state of the system, of the current state of the permissions of the system and/or of the current state of the task and may be updated whenever said states change. In particular, the second database may be a distributed ledger database managed by the computer network and/or by a subset of the nodes of said network.

According to the present invention, information indicative of the action taken by the system may be encoded in a second set of symbols and, in particular, may be encrypted. In particular, the second set of symbols may be encoded in a hash which is constructed by using a hash algorithm, the hash algorithm using at least a cryptographic hash function.

According to the present invention, the information indicative of the system may be encoded in a third set of symbols, e.g. an alphanumeric string, associated to the actual identity of the system. This information may be encoded in such a way that it does not enable the nodes of the computer network to trace the actual identity of the system. For example, the association between the identity of the system and the third set of symbols may be unknown to the nodes of the computer networks whilst being known to the second computing device. In particular, the association between the system and the third set of symbols may be known to the authority that has assigned the task to the system. For example, if the system is a machine tool, the authority is the computing device that carries out the diagnostic of the machine tool.

In particular, according to the present invention, the third set of symbols may be a hash of the identification data of the system. For instance, this hash may be encoded by using a hash algorithm, which uses at least a cryptographic hash function to encrypt the identification data of the system. For example, if the system is a machine tool identified by a serial number, the information indicative of the system is encoded in a hash of the serial number. In particular, if the system is a patient, the information indicative of the system is encoded in a hash of the name and the birth date of the patient.

According to the present invention, the computer network may comprise a set of nodes which are in data communication with one another, e.g. may exchange data with one another by using connections, e.g. data links. For instance, each two nodes of the computer network may exchange data with one another e.g. directly and/or via another node of the computer network. In particular, two nodes of the computer network do not need to be in direct data communication with one another and, for example, may exchange data with one another via another node of the computer network. The aforementioned data links between nodes of the computer network may be established over at least a wired and/or a wireless medium. According to the present invention, a wired medium may be a coaxial cable, an optical fiber cables or the like, and a wireless medium may be a Wi-Fi or the like.

In particular, the computer network does not comprise the second computing device. For example, the computer network may consist of the plurality of nodes, across which the DLD is shared. Alternatively, the computer network may comprise at least a node that does not store and/or does not synchronize a copy of the DLD.

According to the present invention, the first and the second computing device may be different from one another. For example, the first computing device may be a client of a user that wishes to store the first information in the DLD. According to the present invention, the second computing device may be a server in data communication with the computer network. In particular, the first information is encoded in the first data item, which is signed by client and provided to the server. Upon receipt of the first signed data item, the server initiates the storing of the first information in the DLD.

The second computing device may not store and/or may not synchronize a copy of the DLD. The second computing device may have the permission to provide data items to the computer network for storing and/or for validation. At least the first node of the computer network may have permission to send data items to the second computing device. The second computing device of the present invention is configured to generate the first data item. For instance, the second computing device stores the SDKs that allow for generating the first data item and/or for initiating the storing of said data item.

According to the present invention, the second computing device is in data communication with the computer network via the first node of the computer network, e.g. the second computing device is in data communication with the first node. The second computing device may exchange data with the first node e.g. via a data link established over at least a wired and/or a wireless medium. For instance, the second computing device of the present invention may be in direct data communication with a node of the computer network and/or in data communication with said node via the first node. In particular, the first computing device is not in direct data communication with the computer network and does not have access to the DLD.

According to the present invention, a distributed ledger database is in particular a database spread across a plurality of nodes. Data contained in a distributed ledger database may be replicated, shared, and/or synchronized across the plurality of nodes of a computer network. Each of said nodes stores a copy of the distributed ledger database and updates said copy only if the nodes of the computer network agree by consensus on the update, thereby guaranteeing that copies stored by different nodes are identical to one another. In particular, distributed ledger databases allow for storing data in a verifiable, immutable way.

In particular, the step of initiating an action, such as the generating, the providing and/or the validating of a data item, is performed by instructing a computing device to perform and/or initiate said action. For example, the step of initiating, by the first computing device, the generating of the first data item may be carried out by instructing the second computing device to generate said data item. This step comprises providing the second computing device with the initiating data item.

According to the present invention, providing a computing device with a data item may comprise sending said data item to the latter computing device. Alternatively, or in conjunction with the above, providing a computing device with a data item may comprise making said data item available for downloading and/or copying to the computing device. In particular, providing a computing device with a data item may comprise allowing said device to access the information encoded by the data item. For example, access may be granted by sending to the computing device a link to the data item. For instance, if the data item is password-protected, the access to the information of the data item may be granted by supplying to the computing device a username/password access to said data item. According to the present invention, providing a computing device with a data item may comprise instructing another computing device to carry out the providing of said data item to the former computing device. For example, providing a computing device with a data item may comprise sending said data item to a further computing device, which, in turn, sends the data item to the former computing device.

In particular, the initiating data item of the present invention comprises initiating information and the step of initiating the generating of the first data item may comprise allowing the second computing device to access the initiating information. For example, the initiating information may comprise information instructing and/or prompting the second computing device to generate and/or initiate the generating of the first data item. For instance, according to the present invention, the initiating information may comprise information for generating the first information.

In particular, in the present invention, the initiating information may comprise information indicative of the action taken by the system, information indicative of the system, and/or information indicative of the task, that shall be performed by the system.

According to the present invention, the step digitally signing a data item by using a first private key may comprise, e.g. consist of, generating a signed data item. The signed data item may comprise, e.g. consists of, the former data item and a digital signature thereof. This digital signature may be constructed by using the private key and the data item. For instance, the digital signature is constructed by encrypting the data item by using the private key, i.e. the digital signature is an encryption of the data item. In particular, according to the present invention, a digital signature comprises, e.g. consists of, a set of symbols obtained by encrypting a data item by using a private key.

The first private key may be owned by the system and may be stored in a primary and or secondary memory portion. In particular, the first computing device has permission to read from and, optionally, to write to the aforementioned memory. For instance, the second computing device and/or each node of the computer network do not have permission to read from and to write the memory portions, in which the first private key is stored.

According to the present invention, data items, digital signatures, and/or information may be encrypted according to encryption procedures by using a private key. Said procedures may comprise at least a symmetric key algorithm and/or at least a public-key encryption algorithm. In particular, said symmetric key algorithm and/or public-key encryption algorithm uses the aforementioned private key.

The symmetric key algorithm is for example the Twofish, the Serpent, the Advanced Encryption Standard, the Blowfish, the CAST5, the Kuznyechik, the RC4, the DES, the 3DES, the Skipjack, the IDEA algorithm, or the like. The Public-key encryption algorithm may be the Diffie-Hellman key exchange protocol, the ElGamal encryption algorithm, the Paillier cryptosystem, the RSA encryption algorithm, the Cramer-Shoup cryptosystem, the YAK authenticated key agreement protocol, or the like. The public-key encryption algorithm may for instance be an algorithm based on an elliptic curve technique or on a password-authenticated key agreement technique.

In particular, according to the present invention, the first signed data item comprises, e.g. consists of, the first data item and a digital signature thereof. This digital signature may be constructed by encrypting the first data item by using the first private key.

In particular, the digital signature of the first computing device authenticates the first data item and specifies that the initiator of the storing of the first information is the first computing device and/or the organization owning said device. According to the present invention, in order for the storing to take place, the first computing device shall digitally sign the first data item. Hence, ultimately, the first computing device controls the storing of the first information and may veto the storing of this information by not signing the first data item.

The first aspect of the present invention allows the first computing device for initiating a safe and transparent storing of the first information. This is achieved without using the resources of this device for generating and initiating the storing of the to-be-stored data item, as these operations are carried out by the second computing device.

The first computing device initiates the generation of the first data item and digitally signs said data item. Since the initiating information is not processed by the computer network, it does not need to be in a format, that can be processed by the nodes and, hence, can be generated without using the SDKs for the DLD.

Although the second computing device may generate and initiate the storing of data items, these items shall be signed by the first computing device. Hence, the digital signature of the first computing device prevents the second computing device from storing information, that is malicious and/or not approved by the first computing device or by the organization owning the latter device. This way, information may be stored in the DLD in a safe way. Moreover, the digital signature allows for certifying the initiator of the storing of the first information, thereby preserving the transparency of the storing of this information.

In an embodiment of the invention, the step of initiating the generating of the first data item comprises initiating the generating of a request data item by providing the second computing device with the initiating data item. Moreover, said embodiment may comprise the steps of:
- digitally signing, by the first computing device, the request data item by using the first private key, thereby generating a first signed request data item; and
- providing, by the first computing device, the second computing device with the first signed request data item.

In particular, the second computing device is configured to initiate the validating of a second signed request data item. The second signed request data item comprises, e.g. consists of, the first signed request data item. For instance, the validating of the second signed request data item is carried out by at least a validating node of the computer network or by a plurality of validating nodes of the computer network.

The request data item may comprise information that requests the DLD to store information. This data item may further comprise information suitable for generating the first information. According to the present invention, the initiating data item may comprise, e.g. consist of, the request data item.

In particular, according to the present invention, the first signed request data item comprises, e.g. consists of, the request data item and a digital signature thereof. This digital signature may be constructed by encrypting the request data item by using the first private key. In particular, the digital signature of the first computing device authenticates the request data item and specifies that the request to store information has been sent on behalf of the first computing device and/or of the organization owning said device.

According to the present invention, the second signed request data item comprises, e.g. consists of, the first signed data item and a digital signature thereof. This digital signature may be constructed by encrypting the first signed request data item by using the second private key. The second signed request data item may be encoded in a format, which is suitable for being validated by the validating nodes of the computer network. For instance, the second signed request data item is constructed according to the SDKs stored in the second computing device.

In this embodiment, the first computing device initiates a safe and transparent validation of the request. This is achieved without using the resources of this device for generating and initiating the validation second signed request data item, as these operations are carried out by the second computing device. The first computing device initiates the generation of the request data item and digitally signs said data item.

Moreover, the digital signature allows for certifying the initiator of the validation of the request, thereby preserving the transparency of said operation. The second computing device cannot, on its own motion, initiates the requests, as the request data item shall bear the digital signature of the first computing device. Hence, in this embodiment, the first computing device controls both the requesting of the storing and of the storing of the first information.

In particular, the method according to the first aspect of the invention comprises the step of accessing, by the first computing device, the first data item and/or the step of accessing, by the first computing device, the request data item.

According to the present invention, a computing device may access a data stored in a primary and/or secondary memory portion if the computing device has permission to read from and, optionally, write to said memory portions. For instance, a computing device has permission to read from and/or write to a memory if at least an executable executed by said device has permission to respectively read from and/or write to said memory.

According to the present invention, accessing a data item may comprise receiving, downloading, and/or copying said data item from a computing device. In particular, accessing a data item may comprise accessing at least a portion of the information encoded therein. For example, a data item is accessed by a computing device in such a way that the second computing device may access the information encoded therein. Alternatively, or in conjunction with the above, accessing a data item may comprise receiving, copying, and/or downloading information for accessing the data item. For example, information for accessing a data item may comprise a link to said data item. For instance, if the data item is password-protected, the access to the information of the data item may be granted by supplying a username/password access to said data item.

According to the present invention, the request data item may comprise second information. In particular, the second information is information suitable for generating the first information by using a generation algorithm.

According to the present invention, the second information may comprise the input information needed by the generation algorithm to generate the first information. The first data item of the present invention may comprise the request data item, the first signed request data item and/or the second signed request data item. For example, the second information may comprise information indicative of the action taken by the system, information indicative of the identity of the system, and/or information indicative of the task, that shall be performed by the system. The second information may comprise, e.g. consist of, the initiating information. In particular, the second information may be encoded in a fourth set of symbols and may be encrypted.

According to the present invention, the first data item may comprise the second information. For example, the second information comprised in the first data item is comprised in the request data item. If the first data item comprises the first and/or second signed request data item, the second information comprised in the first data item may be comprised in the first and/or signed request data item, respectively.

In an embodiment of the present invention, the step of digitally signing the request data item comprises checking whether the request data item comprises the second information.

In this embodiment, the first computing device may assess whether the request sent to the DLD comprises information suitable for generating the to-be-stored information. If this is not the case, the first computing device may veto the sending of the request by not signing the request data item. This way, computational resources of the second computing device and/or of the computer network will not be misused to validate an invalid request.

According to the present invention, the initiating data item may comprise the second information. Alternatively, or in conjunction with the above, the initiating information may comprise information allowing the second computing device to access the second information. The initiating information may comprise information instructing and/or prompting the second computing device to generate and/or initiate the generating of the request data item. For instance, the generating of the request data item may be initiated by the receipt, by the second computing device, of the initiating data item.

According to the present invention, an algorithm is in particular a collection, e.g. a sequence, of instructions for processing input information to obtain output information. The instructions of an algorithm may be implemented in a computer and executed by a processor e.g. of the data processing system according to the present invention. The input information of the algorithm my be encoded in input data that may be accessed by the processor carrying out the algorithm. In particular, the processor processes the input data according to the instructions of the algorithm to generate output information, which, typically, is encoded in output data. According to the present invention, in particular, an algorithm processes data when the algorithm comprises instructions, which, when executed by a processor, cause said processor to process these data.

For example, according to the present invention, the second computing device may generate the second information by using the initiating information and encode the former information in the request data item. The request data item is then signed by the first computing device and used to generate the second signed request data item. In particular, the second signed request data item comprises the second information and this information is used by at least a node of the computer network to generate the first information by using the generating algorithm.

In an embodiment of the present invention, the step of digitally signing the request data item comprises checking whether the request data item comprises information indicative of the action taken by the system and/or information indicative of the system.

According to the present invention, checking whether a data item comprises an information encoded in a set of symbols may be carried out by checking whether said data item comprises said set of symbols. For instance, if the information indicative of the action taken by the system is encoded in the second set of symbols, the first computing device checks whether the request data item comprises the second set of symbols.

In particular, the request data item is digitally signed by the first computing device only if the request data item comprises information indicative of the action taken by the system and/or information indicative of the system.

In a further embodiment of the invention, the step of digitally signing the first data item comprises checking whether the first data item comprises the first information.

In particular, the step of digitally signing the first data item comprises checking whether the first data item comprises information indicative of the action taken by the system and/or information indicative of the system. The first data item may be digitally signed by the first computing device only if the first data item comprises the first information. For example, the first data item is digitally signed by the first computing device only if the first data item comprises information specifying that the system has taken the action.

In this embodiment, the first computing device may assess whether the first data item comprises the information to be stored. If this is not the case, the first computing device may veto the sending of the request by not signing the request data item. This way, computational resources of the second computing device and/or of the computer network will not be misused to store unwanted or inaccurate information.

An embodiment of the method according to the invention further comprises the step of providing, by the first computing device, the second computing device with a digital certificate for the first private key.

According to the present invention, a digital certificate for a private key is in particular a data item comprising information specifying the ownership of the private key. In particular, the digital certificate includes information indicative of the private key, e.g. the public key associated thereto, the date of issuance thereof, and the like. The digital certificate may also comprise information specifying the identity of the owner of the private key, e.g. the information indicative of the system. In particular, the information indicative of the system may be encrypted. For example, a digital certificate may specify that the private key is issued for a computing device and/or for the organization owning said device. In particular, an organization may be a natural person, e.g. a user or a patient, or a legal person, e.g. an industry or a bank.

A digital certificate may be created, managed, distributed, stored and/or revoked according to a public key infrastructure. For instance, according to the present invention, a digital certificate for a private key is formatted according to the X.509 format. A digital certificate for a private key may comprise the digital signature of the certificate authority. In particular, this digital signature certifies the authenticity of the digital certificate, e.g. that the private key belongs to the owner specified in the digital certificate. Alternatively, the authenticity of the digital certificate may be certified by using the Web of Trust model.

The provision of the digital certificate allows the second computing device and/or the nodes of the computer network for checking that the first private key is issued for the computing device and/or for the organization owning said device.

A further embodiment of the method according to the first aspect of the invention further comprises the step of providing, by the first computing device, at least a node, e.g. the first node, of the computer network with the digital certificate for the first private key.

An embodiment of the method according to the invention further comprising the step of checking, by the first computing device, whether the first data item is digitally signed by the second computing device by using a second private key.

The second private key may be stored in a primary and or secondary memory portion. In particular, the second computing device has permission to read from and, optionally, to write to the aforementioned memory. For instance, the first computing device and/or each node of the computer network do not have permission to read from and to write to the memory portions, in which the second private key is stored.

According to the present invention, the first data item may comprise, e.g. consist of, a second data item and a digital signature thereof. In particular, this digital signature is constructed by encrypting the second data item by using the second private key.

In particular, the step of digitally signing the first data item is carried out only if the first computing device establishes that the first data item has been digitally signed by the second computing device by using the second private key.

By checking whether the first data item is digitally signed by the second computing device, the first computing device checks whether said data item has been generated by the second computing device or by some untrusted, potentially malicious, computing device. This way, the safety of the storing of the first information is further enhanced.

The invention may further comprise the step of checking, by the first computing device, whether the first data item fulfils each condition of a first set of conditions. In particular, the first aspect of the present invention comprises the steps of digitally signing the first data item and the step of providing the second computing device with the first data item only if the first data item fulfills each condition of the first set of conditions. For example, the first set of conditions may comprise, e.g. consist of, the condition that the first data item comprises the first information. Alternatively, or in conjunction with the above, the first set of conditions may comprise, e.g. consist of, the condition that the first data item is digitally signed by the second computing device by using the second private key.

In a further embodiment of the invention, the step of initiating the generating of a first data item comprises receiving notification information from the second computing device. The notification information may be comprised in a notification data item provided by the second computing device. According to the present invention, the notification information may comprise information specifying that third information is stored in the DLD. Alternatively, or in conjunction with the above, the notification information may comprise the third information. Moreover, the notification information may be digitally signed by the second computing device by using the second private key.

According to the present invention, the third information may comprise, e.g. consist of, information prompting the first computing device to initiate the providing of the initiating data item to the second computing device. For example, the third information is information indicative of the task that the system has to perform. If this is the case, the receipt of the notification information prompts the system to perform the task by taking the action and, in turn, to send the initiating data item to the second computing device. By sending the initiating data item to the second computing device, the first computing device initiates the generating of the first data item and, ultimately, the storing of the first information in the DLD. In this case, the first information may specify that the system has taken the action to perform the task.

In particular, the third information may be encoded in a third data item, which may digitally signed by a third computing device by using a fifth private key. The third computing device is, in particular, owned by the organization, that has assigned the task to the system. The third information may be encoded in a fifth set of symbols and, in particular, may be encrypted.

An embodiment of the first aspect of the present invention may comprise the step of checking whether the notification data item is digitally signed by the second computing device by using the second private key. In particular, in order for the first computing device to provide the second computing device with the initiating data item, the notification data item shall be digitally signed by the second computing device by using the second private key.

In this embodiment, the task to be performed is notified to the first computing device and, hence, said device does not have to repeatedly inquire the DLD to detect the storing of the task assigned to the system.

In a second aspect, the invention refers to a method for initiating the storing of the first information in the DLD. The DLD is managed by the computer network, which comprises a plurality of nodes. The method of the second aspect of the invention comprises the step of:
- generating, by the second computing device, the first data item.

The first data item comprises the first information and the second computing device is in data communication with the computer network via at least the first node of the computer network. The method of the second aspect of the invention further comprises the steps of:
- providing, by the second computing device, the first computing device with the first data item; and
- providing, by the second computing device, the first node of the computer network with a second signed data item, thereby initiating the storing of the first information in the DLD.

The first computing device is configured to digitally sign the first data item by using the first private key, thereby generating the first signed data item. Moreover, the second signed data item comprises the first signed data item. In particular, the first node is configured to store the first information in the DLD according to the method of the third aspect of the present invention.

According to the present invention, the second signed data item may comprise, e.g. consist of, the first signed data item and a digital signature thereof. This digital signature may be constructed by encrypting the first signed data item by using the second private key. The second signed data item is encoded in a format, which is suitable for storing in the DLD. For instance, the second signed data item is constructed according to the SDKs stored in the second computing device.

The step of generating of the first data item may comprise instructing a node of the computer network to generate a portion of the first data item. For example, the step of generating of the first data item may comprise instructing a node of the computer network to initiate the generating a portion of the first data item by instructing a further node of the computer network to generate said portion. The first data item may be generated by using the initiating data item, e.g. the initiating information.

According to the present invention, the second computing device may carry out a step of providing a node and/or a computing device with a data item by instructing another computing device to carry out the providing of said data item to the node and/or the computing device, respectively. For example, the step of providing the first node with the second signed data item may be performed by sending this data item to a dispatch node of the computer network which, then, provides the first node with the second signed data item. For instance, the storing of the first information in the DLD may be initiated by the receipt, by the first node, of the second signed data item. In particular, the second computing device provides a plurality of nodes of the computer network with the second signed data item. More particularly, the second computing device provides each node of the computer network with the second signed data item.

The second aspect of the present invention allows the first computing device for initiating a safe and transparent storing of the first information. This is achieved without using the resources of this device for generating and initiating the storing of the to-be-stored data item, as these operations are carried out by the second computing device.

The first computing device initiates the generation of the first data item and digitally signs said data item. Since the initiating information is not processed by the computer network, it does not need to be in a format, that can be processed by the nodes and, hence, can be generated without using the SDKs for the DLD.

Moreover, the digital signature of the first computing device prevents the second computing device from storing information, that is malicious and/or not approved by the first computing device or by the organization owning the latter device. Moreover, the digital signature allows for certifying the initiator of the storing of the first information, thereby preserving the transparency of the storing of this information.

An embodiment of the second aspect of the present invention comprises the steps of:
- generating, by the second computing device, the request data item;
- providing, by the second computing device, the first computing device with the request data item, wherein the first computing device is configured to generate the first signed request data item by digitally signing the request data item by using the first private key; and
- providing, by the second computing device, a second node of the computer network with a second signed request data item, thereby initiating the validating of the second signed request data item.

In particular, the second node is configured to validate the second signed request data item and the second signed request data item comprises the first signed request data item. According to the present invention, the second node of the computer network may be the first node.

In particular, the second computing device may access the initiating information comprised in the initiating data item. The initiating information may instruct and/or prompt the second computing device to generate the request data item. Alternatively, or in conjunction with the above, the generating of the request data item may be initiated by the receipt, by the second computing device, of the initiating data item.

In particular, the second computing device may access and/or use the initiating information to generate the second information which is then encoded in the request data item e.g. according to the SDKs stored in the second computing device.

Moreover, according to the present invention, the initiating information may comprise information indicative of the action taken by the system, information indicative of the system and/or information indicative of the task, that the system shall perform. If this is the case, the second computing device may access said information and encode it in the request data item e.g. according to the SDKs for the DLD stored in the second computing device.

For instance, providing the second node with the second signed request data item may comprise sending said data item to the first node, which, in turn, sends the data item to the second node. For example, the validating of the second signed request data item may be initiated by the receipt, by the second node, of the second signed request data item. According to the present invention, the second computing device may provide a plurality of validating nodes of the computer network with the second signed request data item. In particular, each of the nodes of the plurality of validating nodes validates the second request data item.

In particular, the second signed request data item comprises the second information. Moreover, providing the second node of the computer network with the second signed request data item may comprise allowing the second node to access the second information. For example, the second information may comprise information instructing and/or prompting the second node to validate the second signed request data item.

In this embodiment, the first computing device initiates a safe and transparent validation of the request. This is achieved without using the resources of this device for generating and initiating the validation second signed request data item, as these operations are carried out by the second computing device. The first computing device initiates the generation of the request data item and digitally signs said data item. Moreover, the digital signature allows for certifying the initiator of the validation of the request, thereby preserving the transparency of said operation. Moreover, the second computing device cannot, on its own motion, initiates the request, as the request data item shall bear the digital signature of the first computing device. Hence, in this embodiment, the first computing device controls both the requesting and the storing of the first information.

In particular, the method of the second aspect of the present invention may comprise the step of accessing, by the second computing device, the first signed data item, the step of accessing, by the second computing device, the first signed request data item, and/or the step of accessing, by the second computing device, the initiating data item.

An embodiment of the second aspect of the present invention comprises the step of digitally signing, by the second computing device, the first signed request data item by using a second private key, thereby generating the second signed request data item.

The second computing device constructs this digital signature by encrypting the first signed request data item by using the second private key. In particular, the second signed request data item comprises, e.g. consists of, the first signed request data item and a digital signature thereof.

In particular, the digital signature of the second computing device provides a further authentication of the first signed request data item. The presence of the signature of the first computing device and of the second computing device allows the computer network to ascertain whether the request has been initiated, generated, and provided by authorized computing devices. This way, the safety and the transparency of the storing of the first information in the DLD is further enhanced.

An embodiment of the second aspect of the present invention comprises the step of checking, by the second computing device, whether the first signed request data item is digitally signed by the first computing device by using the first private key.

According to the present invention, the first signed request data item may comprise, e.g. consist of, the request data item and a digital signature thereof. In particular, this digital signature is constructed by encrypting the request data item by using the first private key. In particular, the generating of the second signed request data item depends on whether the second computing device establishes that the first data item has been digitally signed by the first computing device by using the first private key. For instance, the second aspect of the present invention may comprise the step of digitally signing the first signed data item only if the first signed request data item has been digitally signed by the first computing device by using the first private key.

In particular, the digital signature of the first computing device authenticates the request data item. The presence of the signature of the first computing device allows the second computing device to ascertain whether the request has been initiated by the first computing device. This way, the safety and the transparency of the storing of the first information in the DLD is further enhanced.

In an embodiment of the method according to the second aspect of the invention, the second node is configured to generate a first response data item. Moreover, the step of generating the first data item may be carried out by using at least the first response data item and/or may comprise accessing the first response data item. According to the present invention, the first response data item may comprise response information, the response information comprising the first information and/or information indicative of the validation of the second signed request data item (hereinafter also referred to: "validation information"). The first data item of the present invention may comprise the first response data item. For example, the first information comprised in the first data item is comprised in the first response data item.

In particular, if the second computing device provides a plurality of validating nodes of the computer network with the second signed request data item, each node of said plurality may generate a respective response data item. If this is the case, the step of generating the first data item may be carried out by using each of these response data items.

In particular, the second computing device may access the response information comprised in the first response data item. The response information may instruct and/or prompt the second computing device to generate the first data item. Alternatively, or in conjunction with the above, the generating of the first data item may be initiated by the receipt, by the second computing device, of the first response data item.

The second computing device may access and/or use the response information to generate the first data item. In particular, the second computing device may access the first information comprised in the response information and include the first information in the first data item, e.g. according to the SDKs stored in the second computing device. If the first data item comprises the second data item, the first information may be generated in such a way that the first information is encoded in the second data item.

In an embodiment of the second aspect of the present invention, the step of generating the first data item comprises digitally signing the second data item, thereby generating the first data item.

According to the present invention, the second data item may comprise, e.g. consist of, the first information. Alternatively, or in conjunction with the above, the second data item may comprise information indicative of the validation of the second signed request data item. For instance, the second data item may comprise a digital signature of the second node. The presence of this signature may specify that the second signed request data item is valid and the absence of this signature may specify that the second signed request data item is not valid.

The digital signature of the second computing device authenticates the first data item and allows the first computing device for checking whether said data item has been generated by the second computing device or by some untrusted, potentially malicious, computing device. This way, the safety of the storing of the first information is enhanced.

According to an embodiment of the second aspect of the present invention, the step of generating the first data item further comprises checking whether the first response data item is digitally signed by the second node of the computer network by using a third private key.

In particular, the digital signature of the second node encodes the validation information. For example, the presence of this signature may specify that the second signed request data item is valid and the absence of this signature may specify that the second signed request data item is not valid.

The third private key may be stored in a primary and or secondary memory portion. In particular, the second node has permission to read from and, optionally, to write to the aforementioned memory. For instance, the first computing device and the second computing device do not have permission to read from and to write to the memory portions, in which the third private key is stored.

According to the present invention, the first response data item may comprise, e.g. consist of, a second response data item and a digital signature thereof. In particular, this digital signature is constructed by encrypting the second response data item by using the third private key. The first data item of the present invention may comprise the second response data item. In particular the first information comprised in the first data item may be comprised in the second response data item. The step of generating the first data item may depend on whether the second computing device establishes that the first response data item has been digitally signed by the second node by using the third private key. For instance, in order for the step of generating the first data item to comprise digitally signing the second data item, the second computing device shall establish that the first response data item has been digitally signed by the second node by using the third private key.

In particular, the first data item may comprise, e.g. consist of, the second response data item and the digital signature thereof, constructed by the second node by using the third private key.

In particular, the second computing device provides a plurality of validating nodes of the computer network with the second signed request data item and each node of said plurality generates a respective response data item. If this is the case, the step of generating the first data item may comprises checking, for each node of the plurality of validation nodes, whether the respective response data item is digitally signed by said each node by using a respective private key.

A further embodiment of the method according to the second aspect of the invention comprises the step of providing, by the second computing device, at least a third node of the computer network with the digital certificate for the first private key.

In particular, the third node may in turn send said digital certificate to the first and/or the second node. According to the present invention, the third node may the first and/or the second node. For instance, the step of providing the third node with the second signed request data item may comprise sending said data item to the first node, which, in turn, sends the data item to the third node. The digital certificate may be used by the nodes of the computer network to validate the second signed request data item and/or to check that the first signed data item comprised in the second signed data item is digitally signed by the first computing device by using the first private key.

In this embodiment, the certificate for the first private key is provided to the nodes of the computer network by a computing device, i.e. the second computing device, different from the one that uses the first private key. The risk of the nodes being provided with a tampered certificate is thus reduced and the safety of the storing increased.

An embodiment of the method according to the second aspect of the invention further comprises the step of accessing, by the second computing device, the digital certificate for the first private key. For instance, the digital certificate is provided by the first computing device. This step may comprise, e.g. consist of, receiving said digital certificate.

According to an embodiment of the second aspect of the present invention, the step of providing the first node of the computer network with the second signed data item comprises generating, by the second computing device, the second signed data item by using the first signed data item.

In particular, the step of providing the first node of the computer network with the second signed data item comprises digitally signing, by the second computing device, the first signed data item by using the second private key, thereby generating the second signed data item.

In particular, the digital signature of the second computing device provides a further authentication of the first data item. The presence of the signature of the first computing device and of the second computing device allows the computer network to ascertain whether the generation of the to-be-stored data item has been initiated and carried out by authorized computing devices.

This way, the safety and the transparency of the storing of information in the DLD is further enhanced.

An embodiment of the method of the second aspect of the present invention comprises the step of checking, by the second computing device, whether the first signed data item is digitally signed by the first computing device by using the first private key.

According to the present invention, the first signed data item may comprise, e.g. consists of, the first data item and a digital signature, which is constructed by encrypting the first data item by using the first private key. The step of generating the second signed data item may depend on whether the second computing device establishes that the first signed data item has been digitally signed by the first computing device by using the first private key. For instance, the second aspect of the present invention may comprise the step of digitally signing the first data item only if the first data item has been digitally signed by the first computing device by using the first private key.

In particular, the digital signature of the first computing device authenticates the first data item. The presence of the signature of the first computing device allows the second computer to ascertain whether the first computing device has endorsed the first data item. This way, the safety and the transparency of the storing of information in the DLD is further enhanced.

A further embodiment of the second aspect of the invention further comprises the steps of:
- checking, e.g. periodically checking, by the second computing device, whether the third information is stored in the DLD; and
if each of the conditions of a third set of conditions is fulfilled, the step of:
- notifying the first computing device that the third information is stored in the DLD.

In particular, the third set of conditions comprises, e.g. consists of, the condition that the third information is stored in the DLD.

The step of checking whether the information indicative of the task is stored in the DLD may comprise querying, e.g. periodically querying, the DLD and/or the second database. In particular, the step of checking whether the information indicative of the task is stored in the DLD may be carried out at least by checking whether the information indicative of the task is stored in the second database, as the second database may store information indicative of the current state of the task and the latter information may be stored in the DLD as well. The step of notifying the first computing device may be carried out at least by sending the notification information to the first computing device, e.g. by sending the notification data item to the first computing device.

An embodiment of the second aspect of the present invention may comprise the step of checking whether the third data item is digitally signed by the third computing device by using the fifth private key. If this is the case, in particular, the third set of conditions comprises the condition that the third data item is digitally signed by the third computing device by using the fifth private key.

In this embodiment, the second computing device checks whether the task to be performed is stored in the DLD and/or in the second database and, if this is the case, notify the first computing device. Hence, the latter computing device does not have to repeatedly inquire the database to detect the storing of the task assigned to the system.

The third aspect of the present invention refers to a method for storing the first information in the DLD. The DLD is managed by the computer network, the computer network comprising a plurality of nodes and being in data communication with the second computing device via at least the first node of the computer network. In particular, the method according to the third aspect of the invention comprises the step of:
- accessing, by a fourth node of the computer network, the second signed data item.

The second signed data item is provided by the second computing device and comprises the first signed data item. The first signed data item comprises first information and is digitally signed by the first computing device by using the first private key. The method of the third aspect of the invention further comprises:
- checking, by the fourth node, whether the first signed data item comprised in the second signed data item is digitally signed by the first computing device by using the first private key; and
- storing, by the fourth node, the first information in the DLD.

According to the present invention, the fourth node may be the first, the second, and/or the third node.

For example, the fourth aspect of the present invention may comprise the step of generating, by the fourth node, first checking information, the first checking information comprising information indicative of whether the first signed data item comprised in the second signed data item is digitally signed by the first computing device by using the first private key. For example, if the fourth node establishes that the first signed data item comprised in the second signed data item is not digitally signed by the first computing device by using the first private key, the first checking information may specify that the storing of the first information is invalid. In particular, in order for the first checking information to specify that the storing of the first information is valid, the fourth node shall establish that the first signed data item comprised in the second signed data item is digitally signed by the first computing device by using the first private key.

According to the present invention, checking whether a to-be-checked data item (e.g. the first data item, the first signed data item, the second signed data item, the request data item, the first signed request data item, the second signed request data item, the first response data item, the third data item, and/or the notification data item) is digitally signed by a computing device by using a private key may comprise checking whether:
c1. The to-be-checked data item comprises, e.g. consists of, a data item and a digital signature;
c2. the aforementioned digital signature is an encryption of the latter data item, said encryption being obtained by using the private key; and
c3. the private key is issued for the computing device and/or for the organization owning said device.

In particular, condition c2 may be checked by decrypting the digital signature by using the public key associated to the private key and by comparing the decrypted digital signature with the data item comprised in the to-be-checked data item. According to the present invention, checking whether a private key is issued for a computing device and/or for an organization owning said device may be carried out by using the information encoded in a certificate for the private key. In this case, the computing device that carries out the check shall have access to the certificate for the private key.

In particular, in order for the to-be-checked data item to be considered digitally signed by the a computing device by using a private key, each of the conditions c1 to c3 shall be fulfilled. For instance, according to the present invention, the to-be-checked signed data item is not considered digitally signed by the computing device using the private key if the digital certificate for this key has been revoked or, according to said certificate, the private key is not issued for this computing device and/or for the organization owning said device.

For example, checking whether the first signed data item is digitally signed by the first computing device by using the first private key comprises checking whether (i) the first signed data item comprises, e.g. consists of, the first data item and a digital signature; (ii) this digital signature is an encryption of the first data item, said encryption being obtained by using the private key; and (iii) the private key is issued for the first computing device and/or for the organization owning said device.

For example, the step of storing the first information may be carried out at least by storing said information in the copy of the DLD, that is stored in and maintained by the fourth node. In particular, the step of storing the first information is carried out by storing a fourth data item, which comprises, e.g. consists of, the second signed data item. In particular, the fourth data item stored may comprises the first checking information. The fourth node checks the digital signature of the first computing device and documents the result of the check in a transparent way by storing the first checking information in the DLD. For instance, the DLD, stores the first information, irrespective of whether the storing of said information is considered to be valid, together with the first checking information. Hence, in particular, the DLD documents and stores all the storing requests received by the computer network.

The third aspect of the present invention allows for a safe and transparent storing of the first information without using the resources of the first computing device for generating and initiating the storing of the to-be-stored data item. Although the second computing device may generate and initiate the storing of data items, these items shall be signed by the first computing device, as the fourth node checks whether the first signed data item is signed by the first computing device.

An embodiment of the method according to the third aspect of the invention further comprises the step of:
- accessing, by the fourth node, the second signed request data item.

The second signed request data item is provided by the second computing device and comprises the first signed request data item. The first signed request data item is digitally signed by the first computing device by using the first private key. Moreover, this embodiment comprises the step of:
- validating, by the fourth node, the second signed request data item at least by checking whether the first signed request data item comprised in the second signed request data item is digitally signed by the first computing device by using the first private key.

In particular, the step of validating the second signed request data item may be carried out by using at least a validation algorithm.

In particular, the fourth node checks whether the first signed request data item is digitally signed by the first computing device by using the first private key and generates the validation information. If the fourth node establishes that the first signed request data item is not digitally signed by the first computing device by using the first private key, the validation information specifies that the second signed request data item is invalid. In particular, in order for the validation information to specify that the second signed request data item is valid, the fourth node shall establish that the first signed request data item is digitally signed by the first computing device by using the first private key.

This way, the fourth node checks that the second information comprised in the second signed request data item has been approved by the first computing device and/or by the organization owning said device by means of the digital signature. The fourth node checks the digital signature of the first computing device and documents the result of the check in a transparent way by means of the validation information. Hence, this signature allows the fourth node for distinguishing valid information from malicious information or information that is not approved by the first computing device or by the organization owning the latter device as valid

In particular, the first signed request data item comprises the request data item which, in turn, comprises the second information. Moreover, the step of validating the second signed data item may comprise validating the first information generated by using the second information and the generating algorithm. For example, the validating of the first information is carried out at least by checking whether the first information is consistent with the DLD and/or the second database. For example, the first information is valid if it is consistent with the state of the DLD and/or of the second database. In particular, the storing of the first information in the DLD is associated to a modification of the DLD and, optionally, of the second database. Hence, for instance, in order for the first information to be consistent with the DLD and/or the second database, the aforementioned modification shall be consistent with the state of the DLD and/or the second database.

For instance, in order for the first information to be valid, it shall be compatible with the current state of the system and/or with current the permissions of the system. For example, the first information may comprise information specifying that the system has performed the task. In this case, in particular, in order for the first information to be valid, the current state of the system shall specify that system has to perform said task and the current state of the permissions shall specify that the system is allowed to perform said task.

For instance, in order for the validation information to specify that the second signed request data item is valid, the fourth node shall establish that the first information is valid. Hence, in particular, if the first information is invalid, the validation information specifies that the second signed request data item is valid.

This embodiment allows for a safe and transparent validation of the request without using the resources of the first computing device for generating and initiating the validation of the second signed request data item. The first computing device initiates the generation of the request data item and digitally signs said data item. The second computing device cannot, on its own motion, initiates the requests, as the fourth node checks whether the first signed request data item bears the digital signature of the first computing device.

If the second signed request data item fulfills each condition of a second set of conditions, an embodiment of the third aspect of the present invention may further comprise the step of:
- storing, by the fourth node, the first information in the second database.

In particular, the second set of conditions comprises, e.g. consists of, the condition that the first signed data item comprised in the second signed data item is digitally signed by the first computing device by using the first private key. For example, the second set of condition may comprise the condition that the first checking information specifies that the storing of the first information is valid.

The step of storing the first information in the second database may be achieved by modifying information stored in the second database and/or by storing the first information as new information. The first information may be stored in the second database by storing the fourth data item and/or the second signed data item.

In particular, the second set of conditions comprises, e.g. consists of, the condition that the first signed data item comprised in the second signed data item is digitally signed by the first computing device by using the first private key. For example, the second set of condition may comprise the condition that the first checking information specifies that the storing of the first information is valid.

For example, the first information may specify that the system has taken the action and the first checking information may specify that the storing thereof is valid. If this the case, the first information may be stored in the second database by modifying the current state of the task to specify that the task has been performed by the system. Alternatively, or in conjunction with the above, the first information may be stored in the second database by generating a new database entry comprising said information.

According to an embodiment of the third aspect of the present invention, the step of validating the second signed request data item comprises generating the first response data item. Moreover, the method according to the third aspect of the invention may further comprise the step of providing, by the fourth node, the second computing device with the first response data item.

In particular, the first response data item comprises the response information. The response information may comprise the first information and/or the validation information, i.e. information indicative of the validation of the second signed request data item.

According to the present invention, a node may carry out a step of providing the second computing device with a data item by instructing another computing device to carry out the providing of said data item to the second computing device.

In particular, the fourth node may access the second information comprised in the second signed data item. The second information may instruct and/or prompt the fourth node to generate the first response data item. Alternatively, or in conjunction with the above, the generating of the first response data item may be initiated by the receipt, by the fourth node, of the second signed data item. In particular, the fourth node may access and/or use the second information to generate the response information, which is then encoded in the first response data item. If the first response data item comprises the second response data item, this information may be encoded in the latter data item.

According to an embodiment of the third aspect of the present invention, the step of validating the second signed request data item comprises checking whether the second signed request data item is digitally signed by the second computing device by using the second private key.

According to the present invention, the second signed request data item may comprise, e.g. consist of, the first signed request data item and a digital signature thereof. In particular, this digital signature is constructed by encrypting the first signed request data item by using the second private key. In particular, the step of generating the first response data item depends on whether the fourth node establishes that the second signed request data item has been digitally signed by the second computing device by using the second private key. For instance, in order for the validation information to specify that the second signed request data item is valid, the fourth node shall establish that the second signed request data item has been digitally signed by the second computing device by using the second private key.

In particular, the digital signature of the second computing device further authenticates the first request data item. By checking for the presence of the digital signatures of the first and the second device, the fourth node ascertains whether the request has been initiated, generated, and provided by authorized computing devices. This way, the safety and the transparency of the storing of information in the DLD is further enhanced.

According to an embodiment of the third aspect of the invention, the step of generating the first response data item comprises digitally signing, by the fourth node, a second response data item by using a fourth private key, thereby generating the first response data item. The second response data item may comprise information indicative of the validation of the second signed request data item.

The fourth private key may be stored in a primary and or secondary memory portion. In particular, the fourth node has permission to read from and, optionally, to write to the aforementioned memory. For instance, the first computing device and the second computing device do not have permission to read from and to write to the memory portions, in which the third private key is stored. If the fourth node is the second node, the fourth private key may be the third private key.

In particular, the digital signature of the fourth node encodes the validation information. For example, the presence of this signature may specify that the second signed request data item is valid and the absence of this signature may specify that the second signed request data item is not valid.

In particular, according to the present invention, the first data item may be generated by using the first response data item and may comprise the second response data item and the signature thereof, said signature being constructed by the fourth node by using the fourth private key. for instance, the second set of conditions may comprise the condition that the second signed data item comprises the digital signature of the second response data item and that this digital signature is constructed by the fourth node by using the fourth private key.

According to an embodiment of the third aspect of the invention, the request data item comprises second information for generating the first information by using a generation algorithm. Moreover, the step of generating the first response data item may comprise generating the first information by using the generation algorithm. In particular, the validation algorithm may comprise the generation algorithm.

For example, the second information may specify that the system has taken an action to perform a task. In this case, the generation algorithm may access the DLD and/or the second database to retrieve information indicative of the current state of the system and of the current permissions of the system. The generation algorithm may then process this information and the second information to generate the first information. In this case, for instance, the first information specifies the current state of the system, the current permissions of the system, and that that the system has taken the action to perform the task.

The validation algorithm may process the first information to carry out the validation of the second signed request data item. For example, the validation algorithm assesses whether, according to the current state and permissions of the system, the system has to and is allowed to perform the task and generates the validation information. For instance, if the current state of the system does not specify that the system has to perform the task and/or the current permissions of the system do not specify that the system is allowed to perform the task, the validation information specifies that the second request data item is valid. In particular, in order for the validation information to specify that the second request data item is not valid, the system shall have to perform the task and shall be allowed to perform the task.

An embodiment of the method according to the third aspect of the present invention further comprises the step of accessing, by the fourth node, a digital certificate for the first private key. In particular, the digital certificate is provided by the second computing device. This step may comprise, e.g. consists of, receiving said digital certificate from the first or the second computing device.

A further embodiment of the fourth aspect of the method comprises the step of checking, by the fourth node, whether the second signed data item is digitally signed by the second computing device by using the second private key.

In this embodiment, the first checking information may comprise information indicative of whether the second signed data item is digitally signed by the second computing device by using the second private key. For example, if the fourth node establishes that the second signed data is not digitally signed by the second computing device by using the second private key, the first checking information may specify that the storing of the first information is invalid. In particular, in order for the first checking information to specify that the storing of the first information is valid, the fourth node shall establish that the second signed data item is digitally signed by the second computing device by using the second private key. In particular, the second set of conditions comprises the condition that the second signed request data item is digitally signed by the second computing device by using the second private key.

In particular, the digital signature of the second computing device further authenticates the first signed data item. By checking for the presence of the digital signatures of the first and the second device, the fourth node ascertains whether the initiating of the storing of the first information has been authorized and carried out by authorized computing devices. This way, the safety and the transparency of the storing of information in the DLD is further enhanced.

A fourth aspect of the present invention refers to a computer implemented method for storing the first information in the DLD. The method according to the fourth aspect of the present invention may comprise the steps of the method according to the first aspect of the present invention and/or of the embodiments thereof. Alternatively, or in conjunction with the above, the method according to the fourth aspect of the present invention may comprise the steps of the method according to the second aspect of the present invention and/or of the embodiments thereof. In particular, the method according to the fourth aspect of the present invention comprises the steps of the method according to the third aspect of the present invention and/or of the embodiments thereof.

According to the present invention, the DLD may be a blockchain. In particular, the blockchain is a distributed ledger database in which data are grouped into data batches (referred to as: "blocks") sequentially linked by using cryptography, thereby forming a "chain" of blocks. Said blocks may comprise a timestamp and a set of data items that are typically organized as a Merkle tree. In particular, the timestamps in the blocks allow for temporally ordering the blocks according to their creation time. Each block comprises a cryptographic hash of another block, the latter block being in particular created before the former one. The use of cryptographic hashes to link the blocks of the blockchain renders the blockchain resistant to modification of the data stored therein, which are thus stored in a transparent, non-repudiatable, and/or non-tamperable way. In order to be added to the blockchain, a new block may be required to provide a proof of work or a proof of stake.

In particular, If the DLD is the blockchain, the step of storing the first information in the DLD is performed by hashing the second signed data item and by encoding said data item in the Merkle tree comprised in a block which is then added to the blockchain.

According to the present invention, the first information may comprise, e.g. consist of, encrypted information. In particular, the first information comprises, e.g. consists of, encrypted information indicative of the action taken by the system and/or encrypted information indicative of the system.

For example, according to the present invention, information and/or a data item may be encrypted at least by using a cryptographic hash function. In particular, the first computing device may decrypt the first information and, hence, intelligibly access this information.

According to the present invention, for example, encrypted information is information encoded in an encrypted set of symbols which is generated by encrypting an unencrypted set of symbols, the latter set of symbols encoding the information in an unencrypted form. In particular, the encrypted set of symbols may be generated by using a public key. In this case, computing devices that have access to the private key associated to the public key may generate the unencrypted set of symbols from the encrypted one and, hence, have access to the information.

For example, encrypted information indicative of the action taken by the system may be encoded in the second set of symbols, which is generated by the first computing device by using a fifth set of symbols and a first public key. In particular, the fifth set of symbols comprises information indicative of the action taken by the system in an unencrypted form and is stored in a memory portion of the first computing device. The nodes of the computer network and the second computing device do not have access to the private key associated to the first public key an , hence, cannot decrypt the second set of symbols to intelligibly access the information indicative of the action taken by the system. In particular, the organization providing the task to the system has access to the private key associated to the first public key and may decrypt the second set of symbols, thereby intelligibly accessing the fifth set of symbols and, hence, the information indicative of the action taken by the system.

Alternatively, or in conjunction with the above, the second information may comprise, e.g. consist of, encrypted information. In particular, the second information comprises, e.g. consists of, encrypted information indicative of the action taken by the system and/or encrypted information indicative of the system.

The present invention allows the first computing device for storing sensible information in the DLD in a transparent way, whilst limiting and/or controlling the dissemination of said information. In particular, according to the present invention, the storing of the first information is controlled by the first computing device via its digital signature. Hence, the second computing device may generate the request and the to-be-stored data item without having to intelligibly access the first and/or the second information. Any check on the information comprised in first data item and/or the request data item may be carried out by the first computing device which, depending on the results of these checks, may veto the storing of the first information and/or the sending of the request.

The invention refers also to a data processing system comprising processing means configured to perform the method according to the first aspect of the present invention, the method according to the second aspect of the present invention, the method according to the third aspect of the present invention, and/or the method according to the fourth aspect of the present invention.

In particular, the first computing device is a data processing system comprising a processor configured to perform the method according to the first aspect of the invention and/or the second computing device is a data processing system comprising a processor configured to perform the method according to the second aspect of the present invention. For instance, the fourth node is a data processing system comprising a processor configured to perform the method according to the third aspect of the present invention.

The invention also refers to a computer program product comprising instructions which, when the program is executed by a computer, cause said system to carry out the method according to the first aspect of the present invention, the method according to the second aspect of the present invention, the method according to the third aspect of the present invention, and/or the method according to the fourth aspect of the present invention.

Moreover, the invention refers also to a computer-readable storage medium comprising instructions which, when executed by a data processing system, cause said data processing system to carry out the method according to the first aspect of the present invention, the method according to the second aspect of the present invention, the method according to the third aspect of the present invention, and/or the method according to the fourth aspect of the present invention.

According to the present invention, a computing device may comprise a processing element (CPU, GPU, and the like) and storage means. The storage means may comprise at least a volatile primary memory (e.g. a RAM, a DRAM, a SRAM, a CPU cache memory, and the like), a non-volatile primary memory (e.g. a ROM, a PROM, an EPROM and the like), and/or a secondary memory. In particular, the volatile primary memory temporarily holds program files for execution by the processing element and related data and the non-volatile primary memory may contain bootstrap code for the operating system of the computing device. According to the present invention, a computing device may be a computer system including input and/or output devices and, more particularly, may be a smartphone, a computer, a tablet, or the like. In particular, the first node, the second node, the third node and/or the fourth node of the computer network, may be a computing device or a cluster thereof.

Exemplary embodiments of the invention are described in the following with respect to the attached figures. The figures and corresponding detailed description serve merely to provide a better understanding of the invention and do not constitute a limitation whatsoever of the scope of the invention as defined in the claims. In particular:
- **Fig. 1**: is a schematic representation of a first embodiment of the first computing device, of a first embodiment of the second computing device and of first embodiment of the fourth node according to the present invention; and
- **Figs. 2a, 2b**: depict a flow diagram describing the operation of an embodiment of the fourth aspect of the present invention;

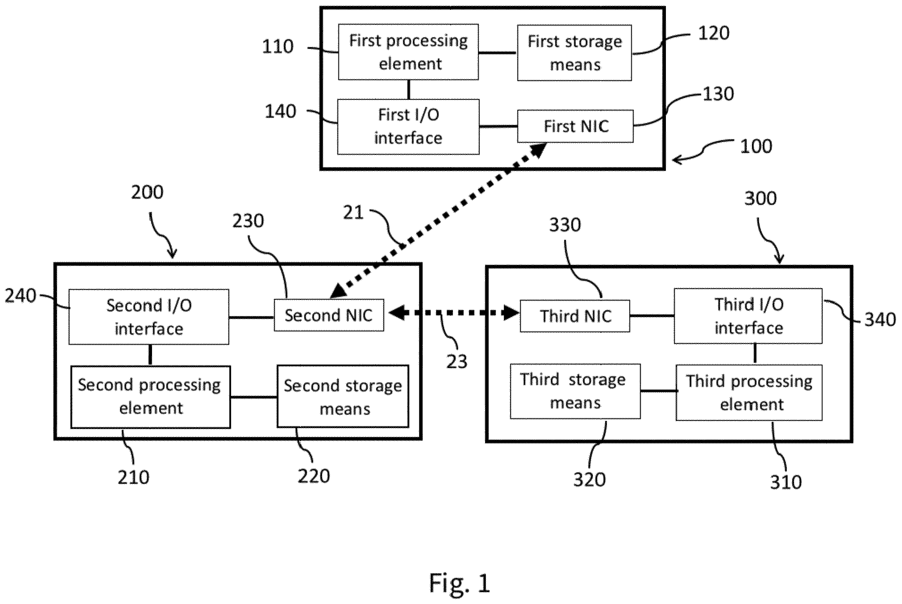

**Fig. 1** depicts a schematic representation of a first embodiment of the first computing device 100, of a first embodiment of the second computing device 200 and of the first embodiment of the fourth node 300.

The first computing device 100 comprises a first processing element 110 and first storage means 120 which are in data communication with one another. In particular, the first computing device may be a tablet, a smart phone, a desktop computer, or the like. The first computing device 100 is in particular a client owned by a user that wishes to store the first information in the DLD.

The first processing element 110 may comprise a CPU and/or a GPU and is configured to carry out the method according to the first aspect of the present invention. The first storage means 120 may comprise a volatile primary memory, a non-volatile primary memory and/or a secondary memory (not shown). In particular, the first storage means 120, e.g. the secondary memory thereof, stores a computer program product comprising instructions which, when the computer program product is executed by the first processing element 110, cause the first computing device 100 to carry out the method according to the first aspect of the present invention. The first computing device 100 further comprise a first input/output (I/O) interface 140 for communicating with input/output devices such as displays, keyboards, touchscreens, printers, mice, or the like.

The second computing device 200 comprises a second processing element 210 and second storage means 220. The second computing device 200 may be a server in data communication with the computer network (not shown) and with the first computing device 100. In particular, the second computing device 200 neither stores nor synchronizes a copy of the DLD or of the second database. The second computing device 200 is configured to generate the first data item and initiate the storing of said data item in the DLD.

The second processing element 210 ma comprise a CPU and/or a GPU and is configured to carry out the method according to the second aspect of the present invention. The second storage means 220 may comprise a volatile primary memory, a non-volatile primary memory and/or a secondary memory (not shown). In particular, the second storage means 220, e.g. the secondary memory thereof, stores a computer program product comprising instructions which, when the computer program product is executed by the second processing element 210, cause the second computing device 200 to carry out the method according to the second aspect of the present invention. Moreover, the second storage means 220 store the SDKs, that allows the second computing device for encoding the first information and/or the second information in a format, that is suitable to be processed by the computer network (not shown).

The fourth node 300 comprises a third processing element 310 and third storage means 320. The fourth node 300 is part of the computer network (not shown) that manages the DLD. In particular, the fourth node 300 may exchange data with the other nodes of the computer network. The fourth node 300 stores a copy of the DLD and updates said copy only if the nodes of the computer network agree by consensus on the update, thereby guaranteeing that copies stored by different nodes are identical to one another.

In particular, the third processing element 310 comprises a CPU and/or a GPU and is configured to carry out the method according to the third aspect of the present invention. The third storage means 320 may comprise a volatile primary memory, a non-volatile primary memory and/or a secondary memory (not shown). In particular, the third storage means 320, e.g. the secondary memory thereof, stores a computer program product comprising instructions which, when the computer program product is executed by the third processing element 310, cause the fourth node 300 to carry out the method according to the third aspect of the present invention.

The third storage means 320 stores a copy of the DLD and a management software for managing, updating, and synchronizing this copy. Moreover, the third storage means 330 may also store a copy of the second database as well as database management system software to manage said database.

The second computing device 200 and/or the fourth node 300 may further comprise a second input/output (I/O) interface 240 and/or a third input/output (I/O) interface 340, respectively, for communicating with input/output devices (e.g. displays, keyboards, touchscreens, printers, mice, or the like).

The first computing device 100, the second computing device 200, and the fourth node 300 respectively comprise a first 130, a second 230, and a third 330 network interface controller (NIC) configured to connect said devices with one or more suitable networks. According to the present invention, a suitable network may for instance be an intranet, the internet or a cellular network.

The first computing device 100 and the second computing device 200 may exchange data with one another via the first NIC 130 and the second NIC 230. The first computing device 100 and the fourth computing device 300 may be connected with one another by using a first protocol suite such as TCP and IP, said protocol being schematically represented in **fig. 1** by the double-arrowed dashed line 21.

The second computing device 200 and the fourth node 300 may exchange data with one another via the second NIC 230 and the third NIC 330. For instance, the second computing device 200 and the fourth node may exchange data with one another e.g. directly and/or via another node (not shown) of the computer network.

In particular, the second computing device 200 and the fourth node 400 may be connected with one another by using a second protocol suite such as TCP and IP, said protocol being schematically represented in **fig. 1** by the double-arrowed dashed line 23. The second computing device 200 is in data communication with the computer network at least via the fourth node 300.

According to the present invention, a volatile primary memory may comprise or consist of a RAM. According to the present invention, the secondary memory, the primary memories and/or the processing element of a computing device need not be physically housed within the same housing and may instead be spatially separated from one another. In particular, they may be spatially separated from one another and may exchange data with one another via wired and/or wireless media.

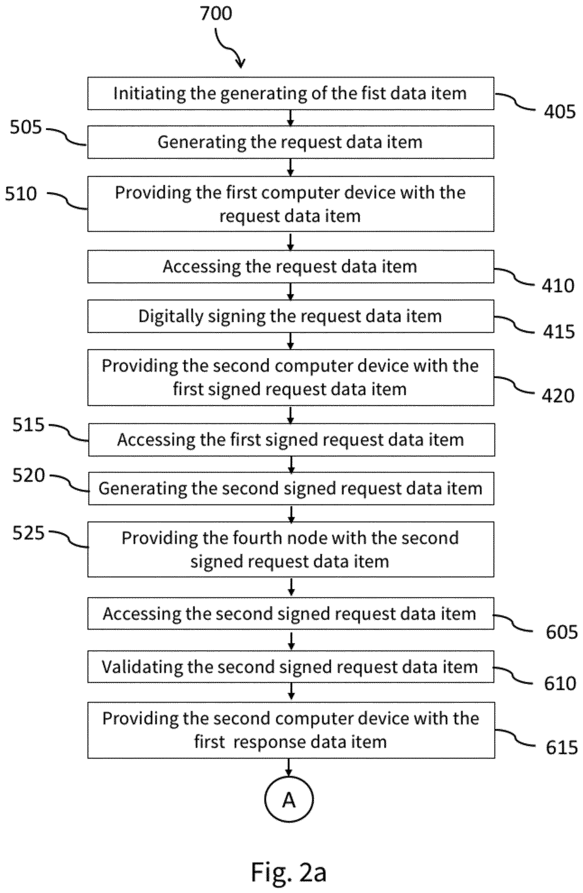

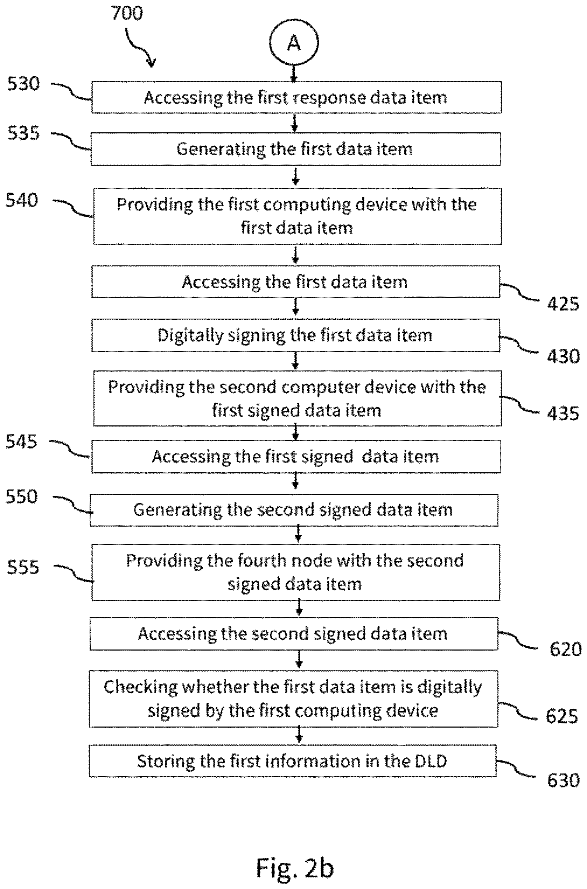

**Figs. 2a** and **2b** depict a flow diagram describing the operation of an embodiment 700 of the fourth aspect of the present invention. At step 405, the first computing device 100 initiates the generating of the first data item by generating the request data item. The generating of the request data item is carried out by sending the initiating data item to the second computing device 200 via the first protocol suite 21. The initiating data item comprises the second information which comprises information indicative of the action taken by the system and information indicative of the system. The action taken by the system is to perform a task assigned by the third computing device (not shown) and/or by an organization owing said device. The second information further comprises information indicative of said organization.

For example, if the system is a machine tool, the action taken by the system is an action aiming to overcome a malfunction of the machine and the information indicative of the system may be a hash of the serial number of the machine. In this case, the third computing device may be a computer of the maintenance department of the factory owning the machine tool.

For instance, if the system is a patient, the action is the action of taking the medication named XYZ and the information indicative of the system may be a hash of the name and the birth date of the patient. In this case, the third computing device may be a computing device owned by the physician prescribing the medication XYZ.

In particular, the information indicative of the action taken by the system, the information indicative of the system and/or the information indicative of the organization are encrypted by the first computing device 100 by using the first public key, which is associated to a private key owned by the organization that has assigned the task to the system. The first computing device 100, the second computing device 200, and the nodes of the computer network do not have access to this private key.

For instance, the second information is encoded in a first, a second and a third alphanumeric string. According to the present invention, an alphanumeric string may comprise alphanumeric characters as well as special characters such as "@", "#", "%", "/", "?", and the like. The first alphanumeric string may comprise encrypted information indicative of the action taken. The second alphanumeric string may comprise encrypted information indicative of the system and the third alphanumeric string may comprise information indicative of the organization, that has assigned the task to the system.

For example, the first alphanumeric string is the encryption of the string "the medicament XYZ has been taken". For instance, the second alphanumeric string is the encryption of the string "Name, Surname born on date of birth", that specifies the name, the surname and the date of birth of the patient. The third alphanumeric string may be string "ID123456", that specifies the identification code of the doctor.

At step 505, the second computing device 200 generates the request data item by using the initiating data item. In particular, the generating of the request data item may be initiated by the receipt, by the second computing device 200, of the initiating data item sent by the first computing device 100 via the first protocol suite 21. The request data item is generated by accessing the second information comprised in the initiating data item and by encoding said information in the request data item according to the SDKs.

If the second information comprises encrypted information, the second computing device generates the request data item without intelligibly accessing this encrypted information, as said device does not have access to the private key associated to the first public key.

At step 510, the second computing device 200 provides the first computing device 100 with the request data item by sending said data item to the first computing device 100 via the first protocol suite 21. Upon receipt of the request data item, at step 410, the first computing device 100 accesses the request data item and checks whether the request data item comprises the second information. For example, the first computing device 100 checks whether the request data item comprises, e.g. consists of, the first, the second, and the third alphanumeric string.

In this case, the first computing device 100 establishes that request data item comprises the second information and, hence, digitally signs the request data item by using the first private key, thereby generating the first signed request data item (step 415). In particular, the first signed request data item consists of the request data item and a digital signature thereof.

At step 420, the first computing device 100 provides the second computing device 200 with the first signed request data item by sending this data item to the second computing device 200 via the first protocol suite 21. Upon receipt of the first signed request data item, the second computing device accesses said data item, step 515, and generates the second signed request data item by digitally signing the first signed request data item by using the second private key (step 520).

At step 525, the second computing device 200 provides the fourth node 300 with the second signed data item, by sending said data item to the fourth node via the second protocol suite 23. Upon receipt of the second signed request data item, the fourth node accesses (step 605) and validates (step 610) the second signed request data item.

More specifically, at step 610, the fourth node 300 carries out a validation algorithm to validate the second signed request rata item. In particular, the validation algorithm comprises instructions which, when executed by the fourth node 300, cause said node 300 to check whether:
c1. The second signed request data item is digitally signed by the second computing device 200 by using the second private key;
c2. The second signed request data item comprises the first signed request data item;
c3. The first signed request data item is digitally signed by the first computing device 100 by using the first private key;
c4. The first signed request data item comprises the second information; and
c5. The format of the second information is suitable to be processed by the fourth node 300 according to the generation algorithm;

If the fourth node 300 establishes that each of the conditions c1 to c5 is fulfilled, it generates the first information by processing the second information by using the generation algorithm and generates the second response data item encoding the first information. In this case, the first information specifies that the system has taken the action and the second response data item may consists of the set of symbols encoding the first information.

For example, if the system is a patient and the action taken is the action of taking the medicament named XYZ, the first information is encoded in a fourth and a fifth alphanumeric string. In this case, the generation algorithm generates the fourth alphanumeric string by concatenating the first alphanumeric string, the alphanumeric string "by the patient" and the second alphanumeric string. The fifth alphanumeric string, instead, is identical to the third one and hence specifies the identification code of the physician. In particular, the first information comprises encrypted information as the first and/or the second alphanumeric string may be encrypted, and the second response data item consists of the third alphanumeric string. As the fourth node 300 does not have access to the private key associated to the first public key, it generates the first information without intelligibly accessing the second information and cannot intelligibly access the first information.

Then, the fourth node 300 generates the first response data item. If the fourth node 300 establishes that each of the conditions c1 to c5 is fulfilled, the first response data item consists of the second response data item and a first digital signature of the second response data item, said signature being made by the fourth node by using the fourth private key.

If the fourth node 300 establishes that at least one of the conditions c1 to c5 is not fulfilled, it generates the first response data item comprising the first information. In this case, for example, the first information specifies that the computer network has received the second signed request data item. If at least one of the conditions c1 to c5 is not fulfilled, the first response data item does not comprise the digital signature of the fourth node 300.

In a variant of this embodiment, the second signed data item may be also sent to a fifth node of the computer network or to a plurality of validating nodes of the computer network. The fifth node, e.g. each node of the plurality of validating nodes, may carry out the validation algorithm described above, thereby generating a respective data algorithm. In particular, in this variant, the fifth node carries out the validation algorithm and generates a third response data item. If the fifth node establishes that the each of the conditions c1 to c5 is fulfilled, the third response data item comprises the second response data item and a second digital signature, said signature being made by the fifth node by using a sixth private key. If, instead, the fifth node establishes that at least one the conditions c1 to c5 is not fulfilled, the third response data item comprises information specifying that the computer network has received the second signed request data item.

At step 615, the fourth node 300 provides the second computing device 200 with the first response data item by sending this data item to the second computing device 200 via the second protocol suite 23. Upon receipt of the first response data item, the second computing device 200 accesses said data item (step 530) and, at step 535, generates the first data item. In this embodiment, the first data item comprises the second signed request data item.

The step of generating the first data item comprises checking whether the first response data item is digitally signed by the fourth node 300 by using the fourth private key. For instance, this step may be carried out by checking whether:
c6. the first response data item comprises the second response data item and a digital signature thereof;
c7. the aforementioned digital signature is an encryption of the request data item, said encryption being obtained by using the fourth private key; and
c8. the fourth private key is issued for the fourth node 300 and/or for the organization owning said node 300.

If the first response data item is digitally signed by the first computing device 100 by using the first private key, the second computing device 100 digitally signs the second data item by using the second private key, thereby generating the first data item. In this case, the second data item comprises the second signed request data item, the second response data item, and the first digital signature. If, instead, at least one of the conditions c6 to c9 is not fulfilled, the second computing device 100 generates the first data item so that it comprises the second signed request data item and information specifying that the computer network has received the second signed request data item. Moreover, in this case, the first data item is not digitally signed by the second computing device.

Alternatively, if also the fifth node has validated the second signed request data item, the step of generating the first data item comprises checking whether:
c9. the first response data item is digitally signed by the fourth node 300 by using the fourth private key; and
c10. the third response data item is digitally signed by the fifth node by using the sixth private key.

In this case, if each of the conditions c9 and c10 is fulfilled, the second computing device 100 generates and digitally signs the second data item by using the second private key, thereby generating the first data item. In this case, the second data item comprises the second signed request data item, the second response data item, the first digital signature, and the second digital signature. If, instead, at least one of the conditions c9 and c10 is not fulfilled, the second computing device 100 generates the first data item so that said item comprises the second signed request data item and information specifying that the computer network has received the second signed request data item. Moreover, in this case, the first data item is not digitally signed by the second computing device.

At step 540, the second computing device 200 provides the first computing device 100 with the first data item by sending said data item to the first computing device 100 via the first protocol suite 21. Upon receipt of the request data item, at step 425, the first computing device 100 accesses the first data item and checks whether the first data item comprises the first information.

For example, the first computing device 100 checks whether the first information specifies that the system has taken the action or that the computer network has received the second signed request data item. If the system is a patient and the action taken is the action of taking the medicament named XYZ, the first computing device 100 may also check whether the first information comprises the identification code of the physician that has prescribed the medicament to the patient.

In this case, the first computing device 100 establishes that the first data item comprises the second information and, hence, digitally signs the first data item by using the first private key, thereby generating the first signed data item (step 430).

At step 435, the first computing device 100 provides the second computing device 200 with the first signed data item by sending this data item to the second computing device 200 via the first protocol suite 21. Upon receipt of the first signed data item, the second computing device 200 accesses said data item, step 545, and generates the second signed request data item by digitally signing the first data item by using the second private key (step 550).

At step 555, the second computing device 200 provides the fourth node 300 with the second signed data item by sending said data item to the fourth node 300 via the second protocol suite 23. Upon receipt of the second signed data item, at step 620 the fourth node accesses the second signed data item, e.g. the information comprised therein. In particular, the second signed data item is sent also to the other nodes of the computer network for storing in the DLD.

Upon receipt of the second signed data item, the fourth node 300 checks whether the first signed data item comprised in the second signed data item is digitally signed by the first computing device (step 625). More specifically, in this embodiment, the fourth node 300 checks whether:
c11. The first signed data item comprised in the second signed data item is digitally signed by the first computing device by using the first private key;
c12. The second signed data item is digitally signed by the second computing device by using the second private key; and
c13. The first data item comprised in the first signed data item comprises the first digital signature.

The fourth node 300 generates the fourth data item comprising the second signed data item and the first checking information. If each of the conditions c11 to c13 is fulfilled, the first checking information specifies that the storing of the first information is valid. if, instead, at least one of the conditions c8 to c10 is not fulfilled, the first checking information specifies that the first information is invalid.

If the validation of the second signed request data item has been also carried out by the fifth data item, the fourth node 300 checks whether the conditions c11 to c13 are fulfilled. Moreover, the node 300 checks also whether:
c14. The first data item comprised in the first signed data item comprises the second digital signature,
and generates the fourth data item. In this variant, if each of the conditions c11 to c14 is fulfilled, the first checking information specifies that the storing of the first information is valid. If, instead, at least one of the conditions c11 to c14 is not fulfilled, the first checking information specifies that the second signed data item is invalid.

At step 630, the fourth node 300 stores the first information in the DLD. In particular, this is achieved by storing the fourth data item in the copy of the DLD, that is stored and maintained by the fourth node 300. Moreover, if the first checking information specifies that the storing of the first information is valid, the fourth node 300 stores the first information in the second database. For instance, this achieved by storing the second signed data item in the copy of the second database, that is stored and maintained by the fourth node 300.

The third computing device may access the second database to check whether the first information has been stored therein and may access the first information. In particular, the third computing device may query the second database by using the third alphanumeric string, which encodes information indicative of the organization, e.g. the identification code of the physician that has prescribed the medicament XYZ to the patient.

If the first information comprises encrypted information, the third computing device may decrypt this encrypted information by using the private key associated to the first public key. For example, if the system is a patient, the third computing device may decrypt the first and the second alphanumeric string comprised in the fourth alphanumeric string thereby allowing the physician for checking whether the patient has taken the prescribed medication.

## Claims

1. Method for generating a first signed data item, the first signed data item comprising first information to be stored in a distributed ledger database, wherein the distributed ledger database is managed by a computer network, the computer network comprising a plurality of nodes,
wherein the method comprises at least the steps of:
• initiating, by a first computing device, the generating of a first data item by providing the second computing device with an initiating data item, wherein the first data item comprises the first information and the second computing is in data communication with the computer network via at least a first node of the computer network;
• digitally signing, by the first computing device, the first data item by using a first private key, thereby generating the first signed data item; and
• providing, by the first computing device, the second computing device with the first signed data item, the second computing device being configured to initiate the storing of the first information in the distributed ledger database.

2. Method according to claim 1, wherein the step of initiating the generating of the first data item comprises initiating the generating of a request data item by providing the second computing device with the initiating data item, and wherein the method further comprises the steps of:
• digitally signing, by the first computing device, the request data item by using the first private key, thereby generating a first signed request data item; and
• providing, by the first computing device, the second computing device with the first signed request data item, the second computer device being configured to initiate the validating of a second signed request data item, the second signed request data item comprising the first signed request data item.

3. Method according to either claim 1 or 2, wherein the step of digitally signing the first data item comprises checking whether the first data item comprises the first information.

4. Method according to anyone of the preceding claims, wherein the step of initiating the generating of a first data item comprises receiving notification information from the second computing device, the notification information comprising information specifying that third information is stored in the distributed ledger database, wherein the third information comprises information prompting the first computing device to initiate the providing of the initiating data item to the second computing device.

5. Method for initiating the storing of first information in a distributed ledger database, wherein the distributed ledger database is managed by a computer network, the computer network comprising a plurality of nodes,
wherein the method comprises at least the steps of:
• generating, by a second computing device, a first data item, wherein the first data item comprises the first information and the second computing device is in data communication with the computer network via at least a first node of the computer network;
• providing, by the second computing device, the first computing device with the first data item, wherein the first computing device is configured to digitally sign the first data item by using a first private key thereby generating a first signed data item; and
• providing, by the second computing device, the first node of the computer network with a second signed data item, thereby initiating the storing of the first information in the distributed ledger database, wherein the second signed data item comprises the first signed data item.

6. Method according to claim 5, further comprising the steps of:
• generating, by the second computing device, a request data item;
• providing, by the second computing device, the first computing device with the request data item, wherein the first computing device is configured to generate a first signed request data item by digitally signing the request data item by using the first private key; and
• providing, by the second computing device, a second node of the computer network with a second signed request data item, thereby initiating the validating of the second signed request data item, wherein the second node is configured to validate the second signed request data item, and wherein the second signed request data item comprises the first signed request data item.

7. Method according to either claim 5 or 6, further comprising the step of:
• checking, by the second computing device, whether third information is stored in the distributed ledger database;
and, if each condition of a set of conditions is fulfilled, the step of:
• notifying the first computing device that the third information is stored in the distributed ledger database,
wherein the third information comprises information prompting the first computing device to initiate the providing of the initiating data item to the second computing device and the set of conditions comprises the condition that the third information is stored in the distributed ledger database.

8. Method for storing first information in a distributed ledger database, wherein the distributed ledger database is managed by a computer network, the computer network comprising a plurality of nodes and being in data communication with a second computing device via at least a first node of the computer network,
wherein the method comprises at least the steps of:
• accessing, by a fourth node of the computer network, a second signed data item, wherein the second signed data item is provided by the second computing device and comprises a first signed data item, the first signed data item comprising first information and being digitally signed by a first computing device by using a first private key;
• checking, by the fourth node, whether the first signed data item comprised in the second signed data item is digitally signed by the first computing device by using the first private key; and
• storing, by the fourth node, the first information in the distributed ledger database.

9. Method according to claim 8, further comprising the steps of:
• accessing, by the fourth node, a second signed request data item, wherein the second signed request data item is provided by a second computing device and comprises a first signed request data item, the first signed data item being digitally signed by the first computing device by using the first private key; and
• validating, by the fourth node, the second signed request data item at least by checking whether the first signed request data item is digitally signed by the first computing device by using the first private key.

10. Method according to either claim 8 or 9, further comprising the step of checking, by the fourth node, whether the second signed data item is digitally signed by the second computing device by using a second private key.

11. Method according to anyone of the preceding claims, wherein the distributed ledger database is a blockchain.

12. Method according to anyone of the preceding claims, wherein the first information comprises encrypted information, information indicative of an action taken by a system and/or information indicative of the system.

13. A data processing system comprising processing means configured to perform the method according to any one of the claims 1 to 12.

14. A computer program product comprising instructions which, when the program is executed by a computer, cause said system to carry out the method according to any one of the claims 1 to 12.

15. A computer-readable storage medium comprising instructions which, when executed by a computer, cause said system to carry out the method according to any one of the claims 1 to 12.
